# EUROPEAN PATENT APPLICATION

(11) **EP 3 982 623 A1**
(43) Date of publication of application: **13.04.2022**
(21) Application number: 20817615.6
(22) Date of filing: 26.05.2020
(51) Int. Cl.: H04N 5/232, G02B 7/08, G03B 5/00, G03B 15/00, G03B 17/56

(54) **IMAGING DEVICE AND IMAGING CONTROL METHOD**

(30) Priority: 04.06.2019 JP 2019104613
(71) Applicant: Sony Group Corporation, Tokyo 108-0075 (JP)
(72) Inventor: NAKAO, Daisuke, Tokyo 108-0075 (JP); NOGUCHI, Shohei, Tokyo 108-0075 (JP); TAKATORI, Jiro, Tokyo 108-0075 (JP); EBI, Hiroaki, Tokyo 108-0075 (JP)
(74) Representative: D Young & Co LLP
(86) International application number: PCT/JP2020/020762
(87) International publication number: WO 2020/246317

(57) **Abstract**

A camera of the present disclosure includes an imaging section, a zooming section, a framing section, and a controller. The controller controls, in a case where one of the zooming section and the framing section is operated by a user operation, another of the zooming section and the framing section that is not operated by the user operation, in accordance with a movement of a subject.

## Description

### Technical Field

The present disclosure relates to an imaging apparatus and an imaging control method that allow for performing zooming and framing.

### Background Art

Typically, an imaging apparatus allows for manually performing zooming and framing by an operation by a user. In addition, there is a technique of automatically performing zooming and framing on the imaging apparatus side so as to achieve shooting with an optimum composition (see PTL 1).

### Citation List

### Patent Literature

PTL 1: Japanese Unexamined Patent Application Publication No. 2009-100301

### Summary of the Invention

It is difficult for a user to manually perform a zooming or framing operation to perform framing adjustment.

It is desirable to provide an imaging apparatus and an imaging control method that allow for easily performing framing adjustment.

An imaging apparatus according to an embodiment of the present disclosure includes an imaging section, a zooming section, a framing section, and a controller. The controller controls, in a case where one of the zooming section and the framing section is operated by a user operation, another of the zooming section and the framing section that is not operated by the user operation, in accordance with a movement of a subject.

An imaging control method according to an embodiment of the present disclosure includes controlling, of an imaging apparatus including an imaging section, a zooming section, and a framing section, in a case where one of the zooming section and the framing section is operated by a user operation, another of the zooming section and the framing section that is not operated by the user operation, in accordance with a movement of a subject.

In the imaging apparatus or the imaging control method according to the embodiment of the present disclosure, in a case where one of the zooming section and the framing section is operated by the user operation, the other of the zooming section and the framing section that is not operated by the user operation is controlled in accordance with the movement of the subject.

### Brief Description of Drawings

[FIG. 1] FIG. 1 is a block diagram illustrating an outline of a configuration of an imaging apparatus according to a first embodiment of the present disclosure.
[FIG. 2] FIG. 2 is a block diagram illustrating a specific example of a configuration of a camera to which the imaging apparatus according to the first embodiment is applied.
[FIG. 3] FIG. 3 is an explanatory diagram illustrating an outline of framing adjustment in a zooming priority mode of the imaging apparatus according to the first embodiment.
[FIG. 4] FIG. 4 is an explanatory diagram illustrating an outline of framing adjustment in a framing priority mode of the imaging apparatus according to the first embodiment.
[FIG. 5] FIG. 5 is an explanatory diagram illustrating a comparison between an outline of a typical automatic exposure control and the outline of the framing adjustment by the imaging apparatus according to the first embodiment.
[FIG. 6] FIG. 6 is a flowchart illustrating an example of a basic operation flow in a case of performing the framing adjustment in the zooming priority mode by the imaging apparatus according to the first embodiment.
[FIG. 7] FIG. 7 is a flowchart illustrating an example of an operation flow in a case of performing the framing adjustment in the zooming priority mode for a particular site by the imaging apparatus according to the first embodiment.
[FIG. 8] FIG. 8 is a flowchart illustrating an example of an operation flow in a case of performing the framing adjustment in the zooming priority mode for a particular site and for a specified region by the imaging apparatus according to the first embodiment.
[FIG. 9] FIG. 9 is a flowchart illustrating an example of a basic operation flow in a case of performing the framing adjustment in the framing priority mode by the imaging apparatus according to the first embodiment.
[FIG. 10] FIG. 10 is a flowchart illustrating an example of an operation flow in a case of performing the framing adjustment in the framing priority mode while maintaining a specified zoom position by the imaging apparatus according to the first embodiment.
[FIG. 11] FIG. 11 is a flowchart illustrating an example of an operation flow in a case of performing the framing adjustment in the framing priority mode for a particular site while maintaining the specified zoom position by the imaging apparatus according to the first embodiment.
[FIG. 12] FIG. 12 is a flowchart illustrating an example of an operation flow in a case of automatically performing ON/OFF switching of the framing adjustment and selection of the operation mode of the framing adjustment by the imaging apparatus according to a second embodiment.
[FIG. 13] FIG. 13 is a flowchart illustrating an example of a basic operation flow in a case of disabling a zoom-in operation in a particular case while performing the framing adjustment in the zooming priority mode by an imaging apparatus according to a third embodiment.
[FIG. 14] FIG. 14 is a flowchart illustrating an example of an operation flow in a case of performing stepwise switching of a particular site to be a target of the framing adjustment while performing the framing adjustment in the zooming priority mode by an imaging apparatus according to a fourth embodiment.

### Modes for Carrying Out the Invention

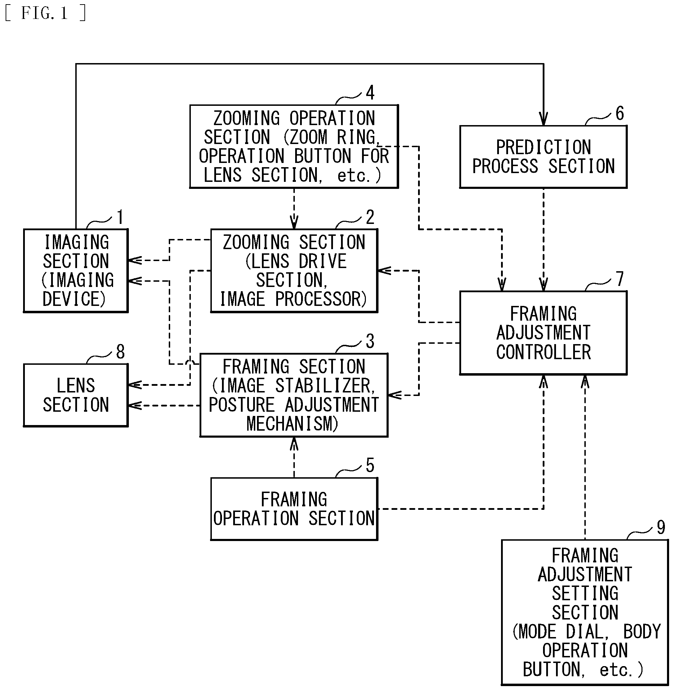

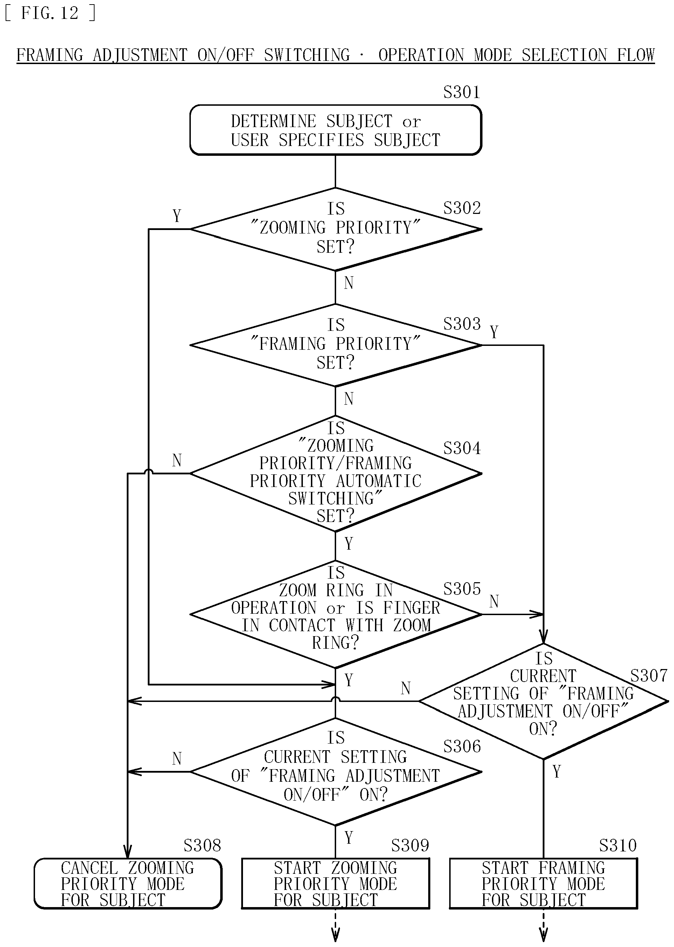

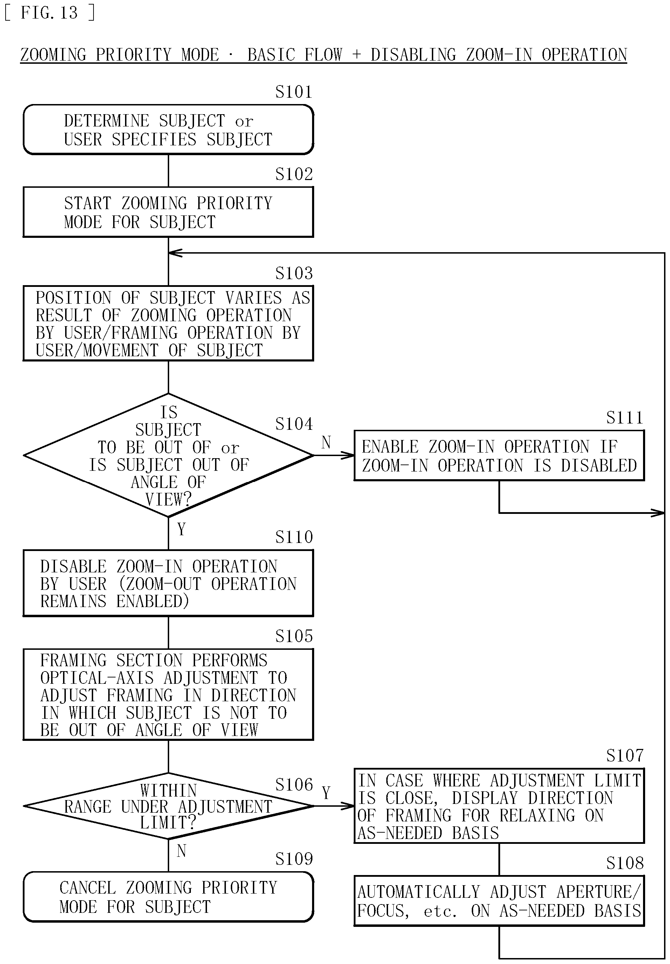

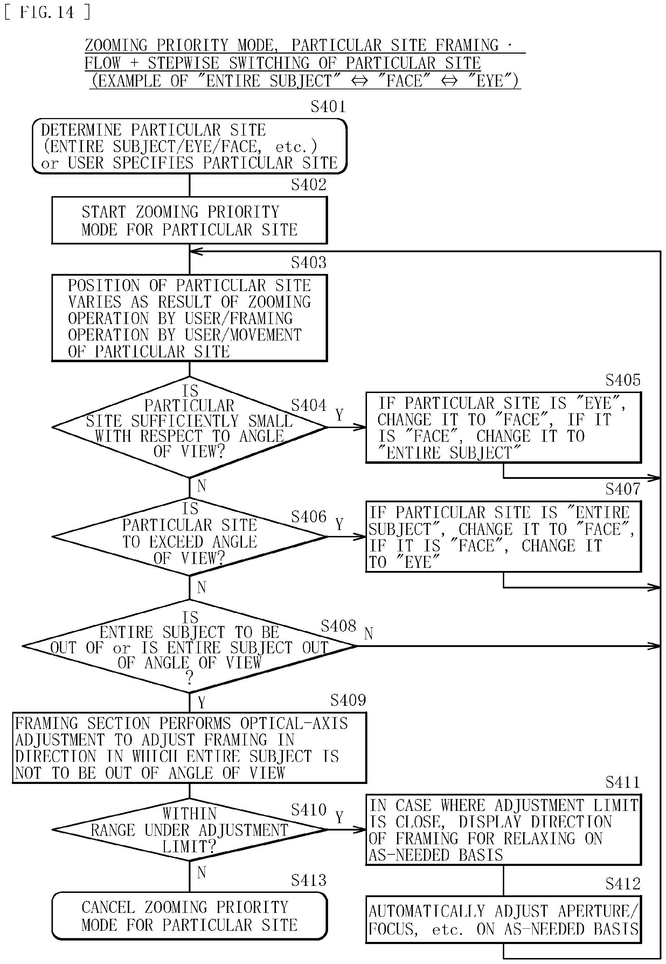

In the following, embodiments of the present disclosure are described in detail with reference to the drawings. It is to be noted that the description will be given in the following order.
1. First Embodiment (FIGs. 1 to 11)
   1.1 Configuration of Imaging Apparatus According to First Embodiment
   1.2 Operation of Imaging Apparatus and Imaging Control Method According to First Embodiment
   1.3 Effects and Modifications
2. Second Embodiment (FIG. 12)
3. Third Embodiment (FIG. 13)
4. Fourth Embodiment (FIG. 14)
5. Other Embodiments

### <1. First Embodiment>

### [1.1 Configuration of Imaging Apparatus According to First Embodiment] (Outline of Configuration of Imaging Apparatus)

FIG. 1 illustrates an outline of a configuration of an imaging apparatus according to a first embodiment of the present disclosure.

The imaging apparatus according to the first embodiment includes an imaging section 1, a zooming section 2, a framing section 3, a zooming operation section 4, a framing operation section 5, a prediction process section 6, a framing adjustment controller 7, a lens section 8, and a framing adjustment setting section 9.

The imaging section 1 includes an imaging device such as a CCD (Charge Coupled Device) or a CMOS (Complementary Metal Oxide Semiconductor). The imaging section 1 performs shooting of a subject and outputs an imaging signal.

The zooming section 2 performs zooming for the subject. It is to be noted that, regarding the imaging apparatus according to the first embodiment, the subject may be the entire subject or a particular site of the subject. The zooming section 2 is operable by a user operation via the zooming operation section 4. The zooming section 2 performs a process based on a movement of the subject in a case where the framing section 3 is operated by the user operation. The zooming section 2 may include, for example, at least one of a lens drive section or an image processor. The lens drive section drives the lens section 8 to perform optical zooming. The image processor performs electronic zooming on the basis of the imaging signal from the imaging section 1.

The framing section 3 performs framing for the subject. The framing section 3 is operable by the user operation via the framing operation section 5. The framing section 3 performs a process based on the movement of the subject in a case where the zooming section 2 is operated by the user operation. The framing section 3 may include, for example, at least one of an image stabilizer or a posture adjustment mechanism. The image stabilizer drives at least one of the imaging section 1 or the lens section 8 to perform image stabilization. The posture adjustment mechanism is configured to adjust a posture of the imaging apparatus as a whole. The posture adjustment mechanism may be a pan head, a tripod, or the like having an adjustment mechanism.

The zooming operation section 4 performs a zooming operation on the zooming section 2. The zooming operation section 4 is a part to be operated by the user. The zooming operation section 4 may include, for example, at least one of a zoom ring or an operation button. The zoom ring drives the lens section 8 to allow for the user operation on the zooming section 2. The operation button is provided on the lens section 8.

The framing operation section 5 is a part to be operated by the user. The framing operation section 5 performs a framing operation on the framing section 3.

The prediction process section 6 recognizes the movement of the subject and predicts whether or not the subject is to be out of a predetermined shooting range.

The framing adjustment controller 7 corresponds to one specific example of a "controller" of the technology of the present disclosure. The framing adjustment controller 7 controls, in a case where one of the zooming section 2 and the framing section 3 is operated by the user operation, the other of the zooming section 2 and the framing section 3 that is not operated by the user operation, in accordance with the movement of the subject. The framing adjustment controller 7 controls the other of the zooming section 2 and the framing section 3 that is not operated by the user operation, in accordance with the movement of the subject to cause the subject not to be out of the predetermined shooting range. As an example of a control based on the movement of the subject, specifically, in a case where the prediction process section 6 predicts that the subject is to be out of the predetermined shooting range, and where the zooming section 2 is performing zooming on the basis of the operation by the user operation, the framing adjustment controller 7 controls the framing section 3 to perform framing adjustment to cause the subject not to be out of the predetermined shooting range. Hereinafter, an operation mode for thus performing the framing adjustment by giving priority to the zooming operation by the user is also referred to as a "zooming priority mode".

Further, as another example of the control based on the movement of the subject, specifically, in a case where the prediction process section 6 predicts that the subject is to be out of the predetermined shooting range, and where the framing section 3 is performing framing on the basis of the operation by the user operation, the framing adjustment controller 7 controls the zooming section 2 to perform the framing adjustment to cause the subject not to be out of the predetermined shooting range. Hereinafter, an operation mode for thus performing the framing adjustment by giving priority to the framing operation by the user is also referred to as a "framing priority mode".

In a case where the framing section 3 is operated by the user operation, and where the prediction process section 6 predicts that the subject is not to be out of the predetermined shooting range, the framing adjustment controller 7 may control the zooming section 2 to perform a control of maintaining a predetermined zoom position.

The imaging apparatus according to the first embodiment may further include a shutter button that instructs the imaging section 1 to perform shutter operation. In a case where the shutter button is pressed halfway, the framing adjustment controller 7 may perform the framing adjustment which is a control based on the movement of the subject.

The lens section 8 forms an optical image of the subject. The lens section 8 preferably includes a zoom lens that allows for zooming. Further, the lens section 8 preferably has a lens configuration that allows for diaphragm adjustment and focusing adjustment.

The framing adjustment setting section 9 includes, for example, a mode dial, a body operation button, and the like. The mode dial is for configuring setting of the operation mode at the time of shooting and the like. The framing adjustment setting section 9 configures, for example, the setting of the operation mode or the like at the time of performing the framing adjustment which is the control based on the movement of the subject.

It is to be noted that the imaging apparatus according to the first embodiment may have a configuration in which some of the components illustrated in FIG. 1 are provided outside. For example, the prediction process section 6 may be provided outside of the imaging apparatus.

### (Specific Example of Configuration of Camera to Which Imaging Apparatus is Applied)

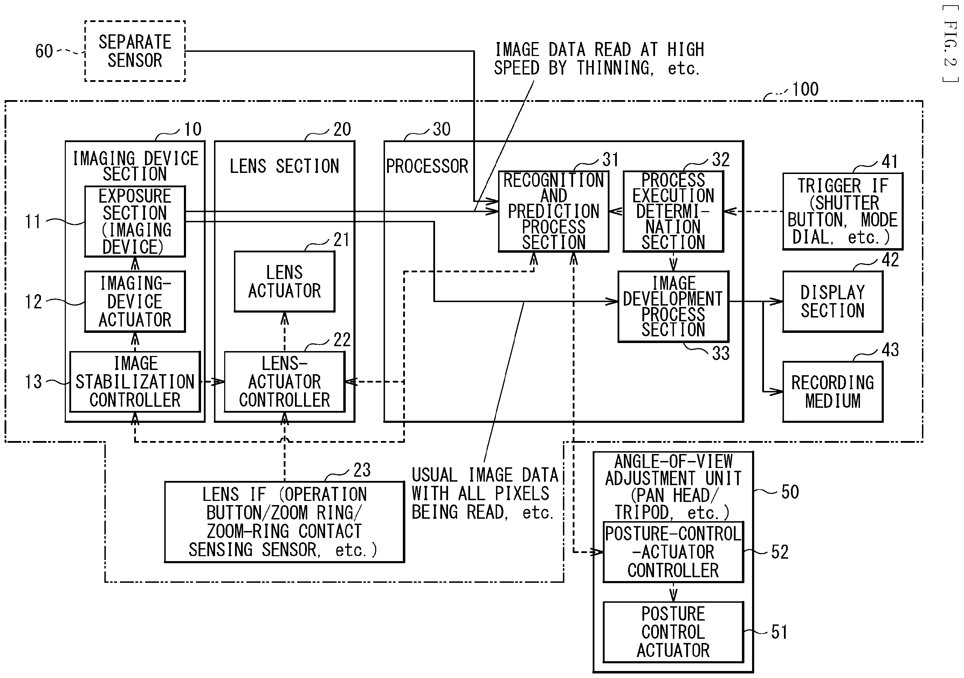

FIG. 2 illustrates one specific example of a configuration of a camera to which the imaging apparatus according to the first embodiment is applied.

The camera according to the first embodiment includes a camera body 100 and an angle-of-view adjustment unit 50. The angle-of-view adjustment unit 50 controls a posture of the camera body 100. The camera according to the first embodiment may further include a separate sensor 60.

The camera body 100 includes an imaging device section 10, a lens section 20, a lens IF (interface) 23, a processor 30, a trigger IF (interface) 41, a display section 42, and a recording medium 43. The display section 42, the recording medium 43, etc. may be configured separately from the camera body 100.

The imaging device section 10 includes an exposure section 11, an imaging-device actuator 12, and an image stabilization controller 13.

The exposure section 11 corresponds to one specific example of the imaging section 1 in the configuration of FIG. 1. The exposure section 11 includes an imaging device such as a CCD or a CMOS. The exposure section 11 performs shooting of a subject and outputs an imaging signal.

The imaging-device actuator 12 corresponds to one specific example of the framing section 3 in a case of performing image stabilization in the configuration of FIG. 1. The imaging-device actuator 12 drives (moves) the imaging device of the exposure section 11 in accordance with a control by the image stabilization controller 13 to thereby perform optical image stabilization.

The lens section 20 corresponds to one specific example of the lens section 8 in the configuration of FIG. 1. The lens section 20 includes a zoom lens that allows for zooming. Further, the lens section 20 has a lens configuration that allows for diaphragm adjustment and focusing adjustment. Further, the lens section 20 has a lens configuration that allows for optical image stabilization.

The lens section 20 includes a lens actuator 21 and a lens-actuator controller 22.

The lens actuator 21 corresponds to one specific example of the zooming section 2 in the configuration of FIG. 1 in a case of performing optical zooming. Further, the lens actuator 21 corresponds to one specific example of the framing section 3 in the configuration of FIG. 1 in a case of performing image stabilization. The lens actuator 21 drives (moves) the lens of the lens section 20 in accordance with a control by the lens-actuator controller 22 to thereby perform optical zooming, focusing adjustment, and the like. Further, the lens actuator 21 drives (moves) the lens of the lens section 20 in accordance with a control by the image stabilization controller 13 and the lens-actuator controller 22 to thereby perform optical image stabilization.

The lens-actuator controller 22 controls the lens actuator 21 to drive the lens included in the lens section 20, to thereby achieve zooming, focusing adjustment, optical image stabilization, and the like.

The lens IF 23 includes, for example, an operation button, a zoom ring, a zoom-ring contact sensing sensor, and the like. The lens IF 23 corresponds to one specific example of the zooming operation section 4 and the framing operation section 5 in the configuration of FIG. 1.

The image stabilization controller 13 controls the imaging-device actuator 12 to move the imaging device of the exposure section 11 (optical-axis shift, etc.), thereby achieving optical image stabilization. Further, the image stabilization controller 13 controls the lens actuator 21 together with the lens-actuator controller 22 to move the lens of the lens section 20 (optical-axis shift, etc.), thereby achieving optical image stabilization.

The processor 30 includes a recognition and prediction process section 31, a process execution determination section 32, and an image development process section 33.

The recognition and prediction process section 31 corresponds to one specific example of the prediction process section 6 in the configuration of FIG. 1. The recognition and prediction process section 31 recognizes a movement of the entire subject or a particular site of the subject, and predicts whether or not the entire subject or the particular site of the subject is to be out of the predetermined shooting range. The recognition and prediction process section 31 performs a recognition process and a prediction process on the basis of the imaging signal from the exposure section 11. However, it is desirable that the recognition process and the prediction process be performed at high speeds. Therefore, it is desirable that the recognition and prediction process section 31 receive image data that has been read at a high speed by thinning out pixels or the like. The recognition and prediction process section 31 may be configured to perform the recognition process and the prediction process on the basis of a sensor signal from the separate sensor 60. The separate sensor 60 desirably has a shooting angle-of-view range wider than a shooting angle-of-view range of the imaging device section 10. This makes it possible to perform the recognition process and the prediction process with a wider shooting angle-of-view range. The recognition and prediction process section 31 controls the image stabilization controller 13, the lens-actuator controller 22, and a posture-control-actuator controller 52 on the basis of results of the recognition and the prediction so as to achieve the operation mode set by the trigger IF 41 or the like.

The process execution determination section 32 causes the recognition and prediction process section 31 and the image development process section 33 to execute various processes in the operation mode set by the trigger IF 41, on the basis of a trigger signal from the trigger IF 41.

The image development process section 33 corresponds to one specific example of the zooming section 2 in a case of performing electronic zooming in the configuration of FIG. 1. The image development process section 33 generates image data suitable for recording in the recording medium 43 on the basis of the imaging signal from the exposure section 11. Further, the image development process section 33 generates image data suitable for a display on the display section 42 on the basis of the imaging signal from the exposure section 11. Further, the image development process section 33 performs an image enlargement process or the like in a case of performing electronic zooming. The imaging signal supplied from the exposure section 11 to the image development process section 33 is usual image data with all pixels being read.

The trigger IF 41 includes, for example, a shutter button, a mode dial, and the like. The trigger IF 41 corresponds to one specific example of the framing adjustment setting section 9 in the configuration of FIG. 1.

The display section 42 includes, for example, a liquid crystal display, an organic (Electro Luminescence) display, or the like, and displays image data resulting from shooting. Further, the display section 42 may perform display warning that the framing adjustment by the framing adjustment controller 7 is approaching an adjustment limit.

The recording medium 43 is a recording medium configured to allow for recording of the image data resulting from shooting, for example, a semiconductor recording device or the like. The recording medium 43 may be of a built-in type built inside the camera body 100, or may be an external recording medium of a card type or the like that is attachable to and detachable from the inside of the camera body 100.

The angle-of-view adjustment unit 50 includes a posture control actuator 51 and the posture-control-actuator controller 52. The angle-of-view adjustment unit 50 includes, for example, a pan head, a tripod, and the like.

The posture control actuator 51 corresponds to one specific example of the framing section 3 in a case of adjusting the posture of the camera as a whole in the configuration of FIG. 1. The posture control actuator 51 drives (moves) the pan head, the tripod, and the like in accordance with a control by the posture-control-actuator controller 52 to thereby move the camera body 100, thus performing framing.

The posture-control-actuator controller 52 controls the posture control actuator 51 to drive the pan head, the tripod, and the like to cause framing to be performed.

The recognition and prediction process section 31, the image stabilization controller 13, the lens-actuator controller 22, and the posture-control-actuator controller 52 each correspond to one specific example of the framing adjustment controller 7 in the configuration of FIG. 1.

### [1.2 Operation of Imaging Apparatus and Imaging Control Method According to First Embodiment]

Here, as operation of the imaging apparatus and the imaging control method according to the first embodiment, mainly described is an operation example related to operation of performing the framing adjustment which is the control based on the movement of the subject. Further, the description is given mainly with reference to the configuration illustrated in FIG. 1 as an example.

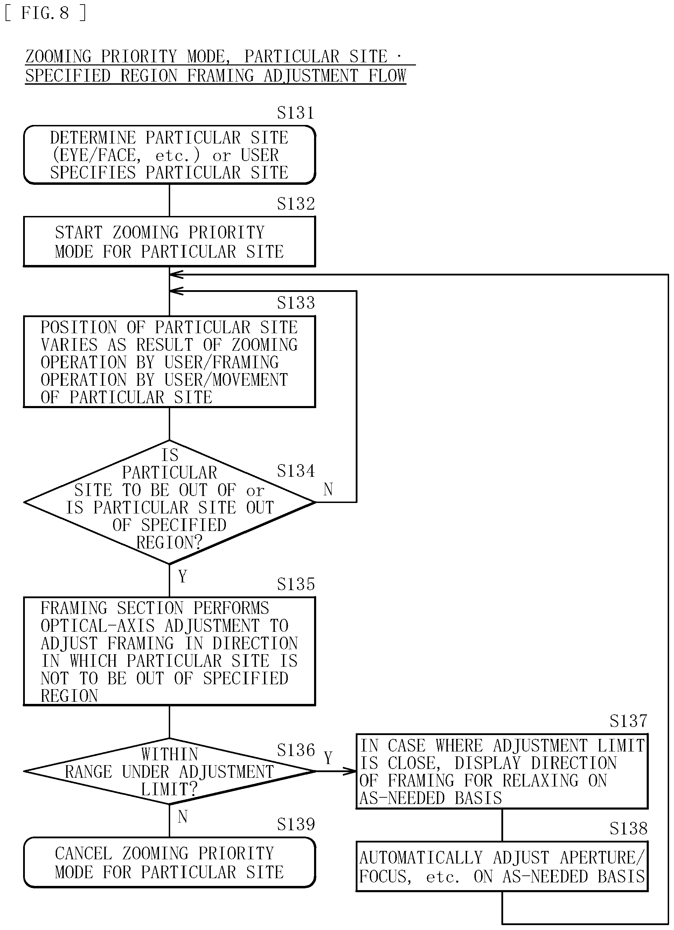

In the imaging apparatus according to the first embodiment, the prediction process section 6 automatically recognizes the movement of the subject, and the framing adjustment controller 7 automatically adjusts the zooming section 2 or the framing section 3, to thereby keep the subject to be present within the predetermined shooting range. The predetermined shooting range may be the entire shooting angle-of-view range, or may be a preset specified region as referred to in an operation example of FIG. 8 which will be described later.

In a case of the zooming priority mode, the user manually adjusts zooming, and the framing adjustment controller 7 controls the framing section 3 to perform framing adjustment that prevents the subject from being framed out. In the framing priority mode, the user manually adjusts framing, and the framing adjustment controller 7 controls the zooming section 2 to perform the framing adjustment that prevents the subject from being framed out.

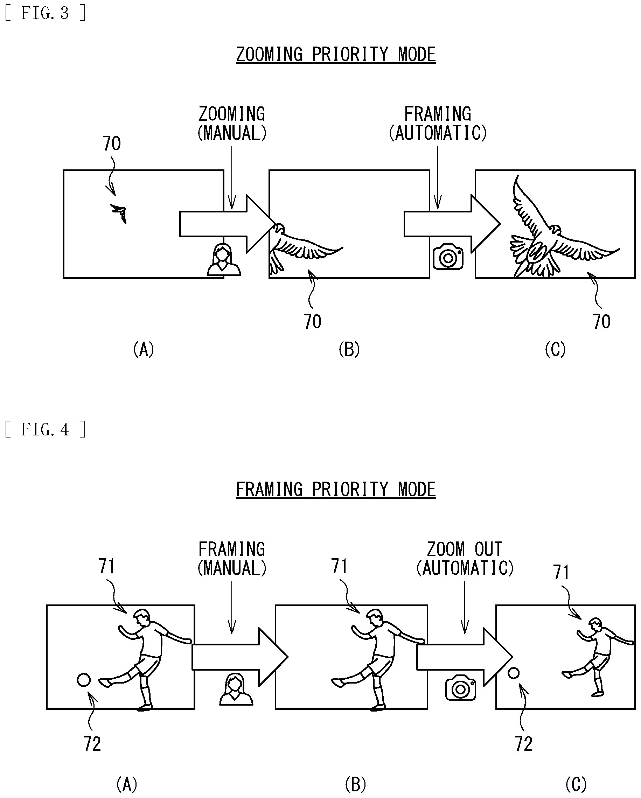

As illustrated in FIG. 3 and FIG. 4, the target of the framing adjustment may be, for example, the entire subject such as a human or an animal, or may be a particular site of the subject. For example, it may be a face, an eye, or the like of the subject such as a human or an animal. Further, a plurality of subjects or a plurality of particular sites of a subject may be present.

FIG. 3 illustrates an outline of the framing adjustment in the zooming priority mode of the imaging apparatus according to the first embodiment. FIG. 4 illustrates an outline of the framing adjustment in the framing priority mode of the imaging apparatus according to the first embodiment.

In a case of FIG. 3, a case where a subject 70 is a bird is illustrated as an example. In the case of FIG. 3, in a case where the user is manually adjusting zooming ((A) of FIG. 3), when the prediction process section 6 predicts that the subject 70 is to be out of the shooting angle-of-view range ((B) of FIG. 3), the framing adjustment controller 7 controls the framing section 3 to automatically perform the framing adjustment that prevents the subject 70 from being framed out ((C) of FIG. 3).

In a case of FIG. 4, the subject is separated into a plurality of sites. The case of FIG. 4 is a scene of playing soccer in which a subject 71 (a player) and a subject 72 (a ball) are present. In the case of FIG. 4, in a case where the user is manually adjusting the framing ((A) of FIG. 4), the prediction process section 6 recognizes that the subject 72 has gone out of the shooting angle-of-view range ((B) of FIG. 4), and the framing adjustment controller 7 controls the zooming section 2 to zoom out to allow the subject 72 to be within the shooting angle-of-view range, thereby automatically performing the framing adjustment ((C) of FIG. 4). Thus, the technology of the present disclosure is effective also in a case where the subject is separated into a plurality of sites.

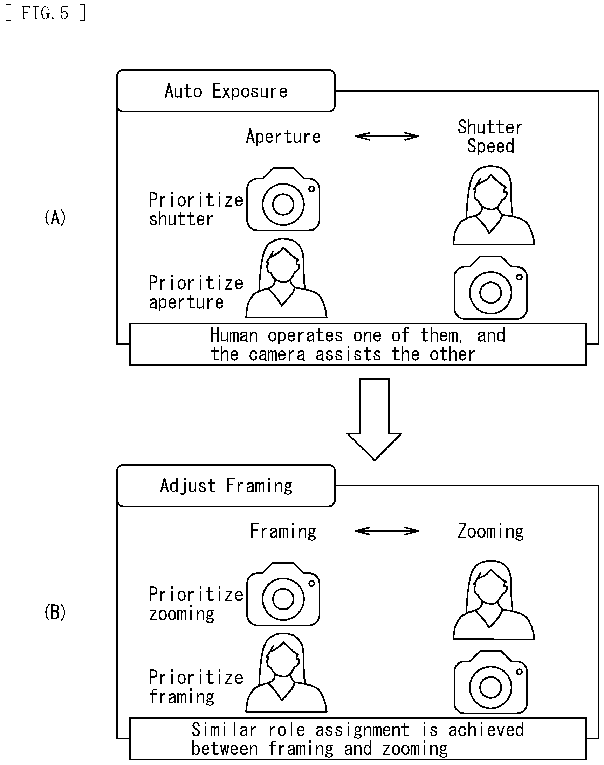

FIG. 5 illustrates a comparison between an outline of a typical automatic exposure control ((A) of FIG. 5) and the outline of the framing adjustment by the imaging apparatus according to the first embodiment ((B) of FIG. 5).

There is an automatic exposure control technique in which one of a shutter speed and an aperture is operated by a user and the other is automatically adjusted by an imaging apparatus side. In a case where the user operates the shutter speed, a shutter priority mode is set, and in a case where the user operates the aperture, an aperture priority mode is set. Meanwhile, the imaging apparatus according to the first embodiment is related to a technique in which one of framing and zooming is operated by the user, and the other is automatically adjusted by the imaging apparatus side. In a case where the user operates the framing, a framing priority mode is set, and in a case where the user operates the zooming, a zooming priority mode is set.

Generally, it is difficult for a user to operate zooming and framing at the same time. For example, in a case where the user is performing zooming, if the subject itself moves quickly, the subject is easily framed out. Further, in a case where the user is following a first subject and a second subject appears, it is difficult to perform shooting of both. The imaging apparatus according to the first embodiment automatically controls one of the zooming and the framing. This makes it possible to easily perform the frame adjustment also in the above-described cases.

### (Examples of Operation in Zooming Priority Mode)

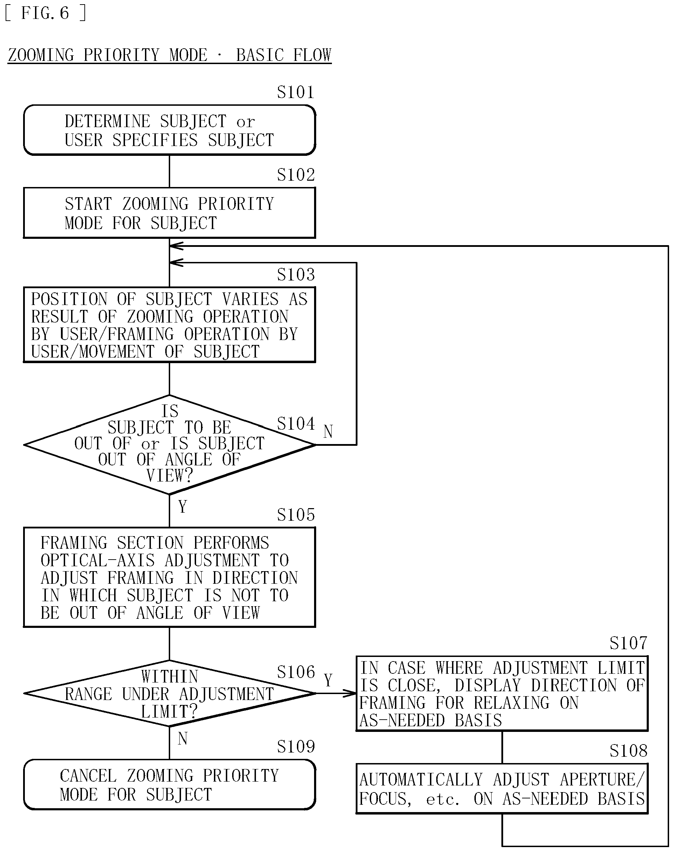

FIG. 6 illustrates an example of a basic operation flow in a case of performing the framing adjustment in the zooming priority mode by the imaging apparatus according to the first embodiment.

First, the prediction process section 6 automatically determines the subject (step S101). Further, the user may manually specify the subject by means of the framing adjustment setting section 9. Thereafter, the imaging apparatus starts operation in the zooming priority mode (step S102).

Thereafter, when a position of the subject varies as a result of the zooming operation by the user, the framing operation by the user, or a movement of the subject (step S103), the prediction process section 6 recognizes or predicts whether or not the subject is to be out of the shooting angle of view, or whether the subject is out of the shooting angle of view (step S104). It is to be noted that, in a case where a plurality of subjects is present, the subjects sometimes get closer to or away from each other. In a case where the prediction process section 6 recognizes or predicts that the subject is not to be out of the shooting angle of view or is not out of the shooting angle of view (step S104; N), the process returns to step S103.

In a case where the prediction process section 6 recognizes or predicts that the subject is to be out of the shooting angle of view or is out of the shooting angle of view (step S104; Y), the framing adjustment controller 7 controls the framing section 3 to perform optical-axis adjustment, thereby performing the framing adjustment in a direction in which the subject is not to be out of the shooting angle of view (basically, in a direction in which the subject moves in a direction toward the center of the screen) (step S105).

Thereafter, the framing adjustment controller 7 determines whether or not the framing adjustment is within a range under the adjustment limit (step S106).

In a case where it is determined that the framing adjustment is not within the range under the adjustment limit (step S106; N), the framing adjustment controller 7 cancels (stops) the control of the framing adjustment in the zooming priority mode (step S109).

In contrast, even in a case where it is determined that the framing adjustment is within the range under the adjustment limit (step S106; Y), if the adjustment limit is close, the framing adjustment controller 7 causes, on an as-needed basis, the display section 42 (FIG. 2) to display a display warning that the framing adjustment is approaching the adjustment limit, a degree related to the adjustment limit, a direction of framing that relaxes the framing adjustment, or the like (step S107). For example, the framing adjustment controller 7 causes the display section 42 (FIG. 2) to perform display presenting which direction the user should shift the framing in to make room for adjustment or the like by means of colors, texts, images, etc. Further, the brightness, the focus, and the like sometimes vary as a result of the zooming operation by the user, the framing operation by the user, or the like. Therefore, the framing adjustment controller 7 controls the lens actuator 21 (FIG. 2) or the like on an as-needed basis to automatically adjust the aperture, the focus, and the like (step S108). Thereafter, the process returns to step S103.

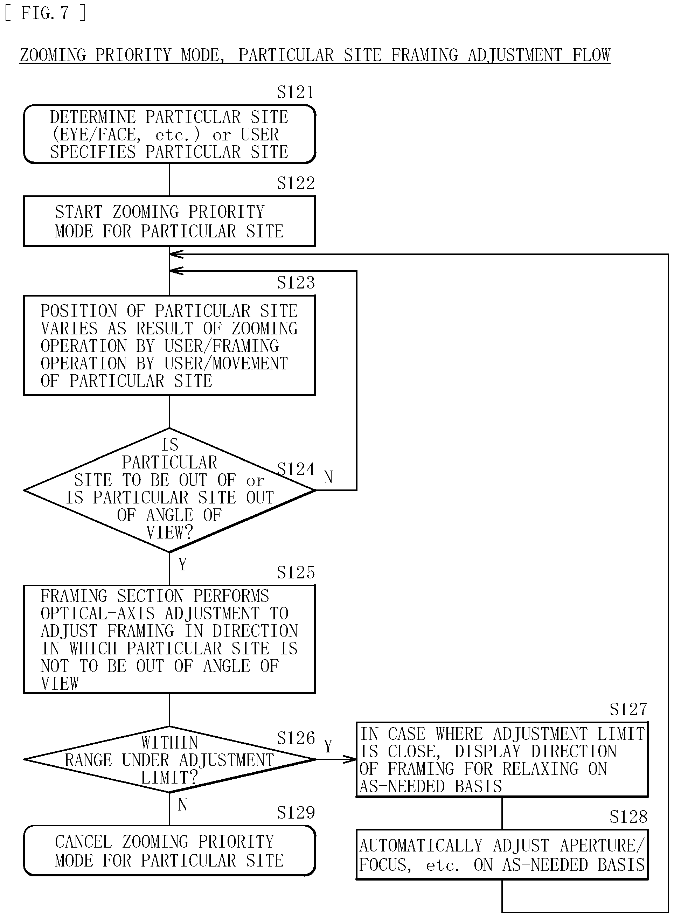

FIG. 7 illustrates an example of an operation flow in a case of performing the framing adjustment in the zooming priority mode for a particular site by the imaging apparatus according to the first embodiment. In this operation flow, the framing adjustment controller 7 performs the framing adjustment that allows not the entire subject but a particular site (object) such as an eye or a face to be kept within the shooting angle-of-view range. In this case, it won't be an issue if the subject as a whole is out of the shooting angle-of-view range, and a closeup shot or the like is also obtainable.

First, the prediction process section 6 automatically determines a particular site of the subject (step S121). Further, the user may manually specify the particular site of the subject by means of the framing adjustment setting section 9. Thereafter, the imaging apparatus starts operation in the zooming priority mode (step S122).

Thereafter, when a position of the particular site varies as a result of the zooming operation by the user, the framing operation by the user, or a movement of the particular site (step S123), the prediction process section 6 recognizes or predicts whether or not the particular site is to be out of the shooting angle of view, or whether the particular site is out of the shooting angle of view (step S124). In a case where the prediction process section 6 recognizes or predicts that the particular site is not to be out of the shooting angle of view or is not out of the shooting angle of view (step S124; N), the process returns to step S123.

In a case where the prediction process section 6 recognizes or predicts that the particular site is to be out of the shooting angle of view or is out of the shooting angle of view (step S124; Y), the framing adjustment controller 7 controls the framing section 3 to perform optical-axis adjustment, thereby performing the framing adjustment in a direction in which the particular site is not to be out of the shooting angle of view (basically, in a direction in which the particular site moves in a direction toward the center of the screen) (step S125).

Thereafter, the framing adjustment controller 7 determines whether or not the framing adjustment is within the range under the adjustment limit (step S126).

In a case where it is determined that the framing adjustment is not within the range under the adjustment limit (step S126; N), the framing adjustment controller 7 cancels (stops) the control of the framing adjustment in the zooming priority mode (step S129).

In contrast, even in a case where it is determined that the framing adjustment is within the range under the adjustment limit (step S126; Y), if the adjustment limit is close, the framing adjustment controller 7 causes, on an as-needed basis, the display section 42 (FIG. 2) to display a display warning that the framing adjustment is approaching the adjustment limit, a degree related to the adjustment limit, a direction of framing that relaxes the framing adjustment, or the like (step S127). For example, the framing adjustment controller 7 causes the display section 42 (FIG. 2) to perform display presenting which direction the user should shift the framing in to make room for adjustment or the like by means of colors, texts, images, etc. Further, the brightness, the focus, and the like sometimes vary as a result of the zooming operation by the user, the framing operation by the user, or the like. Therefore, the framing adjustment controller 7 controls the lens actuator 21 (FIG. 2) or the like on an as-needed basis to automatically adjust the aperture, the focus, and the like (step S128). Thereafter, the process returns to step S123.

FIG. 8 illustrates an example of an operation flow in a case of performing the framing adjustment in the zooming priority mode for a particular site and for a specified region by the imaging apparatus according to the first embodiment. In this operation flow, the framing adjustment controller 7 performs the framing adjustment so as to keep the particular site in the specified region set in advance by the framing adjustment setting section 9, instead of keeping the particular site within the shooting angle-of-view range. In this operation flow, it is possible to maintain a more precise composition.

First, the prediction process section 6 automatically determines a particular site of the subject (step S131). Further, the user may manually specify the particular site of the subject by means of the framing adjustment setting section 9. Thereafter, the imaging apparatus starts operation in the zooming priority mode (step S132).

Thereafter, when a position of the particular site varies as a result of the zooming operation by the user, the framing operation by the user, or a movement of the particular site (step S133), the prediction process section 6 recognizes or predicts whether or not the particular site is to be out of the specified region, or whether the particular site is out of the specified region (step S134). In a case where the prediction process section 6 recognizes or predicts that the particular site is not to be out of the specified region or is not out of the specified region (step S134; N), the process returns to step S133.

In a case where the prediction process section 6 recognizes or predicts that the particular site is to be out of the specified region or is out of the specified region (step S134; Y), the framing adjustment controller 7 controls the framing section 3 to perform optical-axis adjustment, thereby performing the framing adjustment in a direction in which the particular site is not to be out of the specified region (basically, in a direction in which the particular site moves in a direction toward the center of the screen) (step S135).

Thereafter, the framing adjustment controller 7 determines whether or not the framing adjustment is within the range under the adjustment limit (step S136).

In a case where it is determined that the framing adjustment is not within the range under the adjustment limit (step S136; N), the framing adjustment controller 7 cancels (stops) the control of the framing adjustment in the zooming priority mode (step S139).

In contrast, even in a case where it is determined that the framing adjustment is within the range under the adjustment limit (step S136; Y), if the adjustment limit is close, the framing adjustment controller 7 causes, on an as-needed basis, the display section 42 (FIG. 2) to display a display warning that the framing adjustment is approaching the adjustment limit, a degree related to the adjustment limit, a direction of framing that relaxes the framing adjustment, or the like (step S137). For example, the framing adjustment controller 7 causes the display section 42 (FIG. 2) to perform display presenting which direction the user should shift the framing in to make room for adjustment or the like by means of colors, texts, images, etc. Further, the brightness, the focus, and the like sometimes vary as a result of the zooming operation by the user, the framing operation by the user, or the like. Therefore, the framing adjustment controller 7 controls the lens actuator 21 (FIG. 2) or the like on an as-needed basis to automatically adjust the aperture, the focus, and the like (step S138). Thereafter, the process returns to step S133.

### (Examples of Operation in Framing Priority Mode)

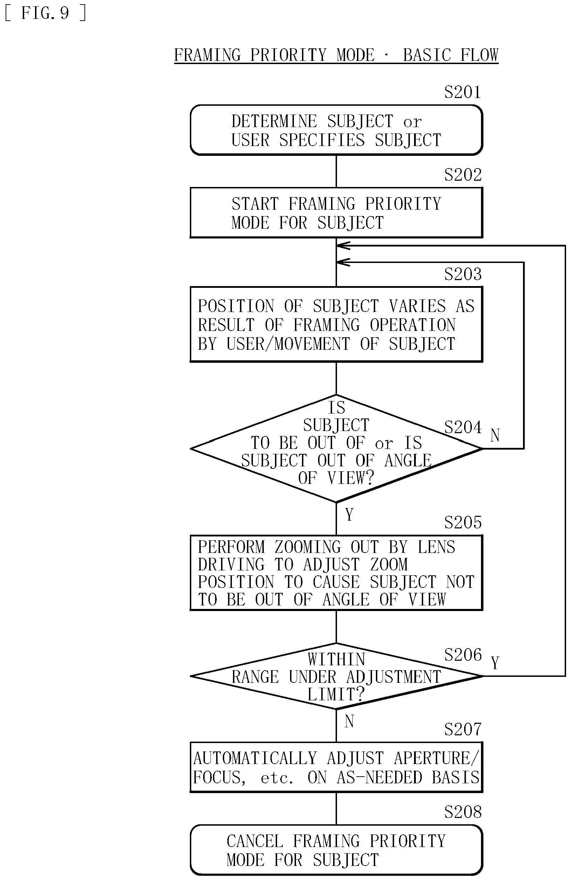

FIG. 9 illustrates an example of a basic operation flow in a case of performing the framing adjustment in the framing priority mode by the imaging apparatus according to the first embodiment.

First, the prediction process section 6 automatically determines the subject (step S201). Further, the user may manually specify the subject by means of the framing adjustment setting section 9. Thereafter, the imaging apparatus starts operation in the framing priority mode (step S202).

Thereafter, when a position of the subject varies as a result of the framing operation by the user or a movement of the subject (step S203), the prediction process section 6 recognizes or predicts whether or not the subject is to be out of the shooting angle of view, or whether the subject is out of the shooting angle of view (step S204). It is to be noted that, in a case where a plurality of subjects are present, the subjects sometimes get closer to or away from each other. In a case where the prediction process section 6 recognizes or predicts that the subject is not to be out of the shooting angle of view or is not out of the shooting angle of view (step S204; N), the process returns to step S203.

In a case where the prediction process section 6 recognizes or predicts that the subject is to be out of the shooting angle of view or is out of the shooting angle of view (step S204; Y), the framing adjustment controller 7 controls the zooming section 2 to perform zooming out by lens driving to adjust a zoom position to cause the subject not to be out of the shooting angle of view, thereby performing the framing adjustment (step S205).

Thereafter, the framing adjustment controller 7 determines whether or not the framing adjustment is within the range under the adjustment limit (step S206).

In a case where the framing adjustment controller 7 determines that the framing adjustment is within the range under the adjustment limit (step S206; Y), the process returns to step S203. In contrast, in a case where it is determined that the framing adjustment is not within the range under the adjustment limit (step S206; N), the brightness, the focus, and the like sometimes vary as a result of the framing operation by the user. Therefore, the framing adjustment controller 7 controls the lens actuator 21 (FIG. 2) or the like on an as-needed basis to automatically adjust the aperture, the focus, and the like (step S207). Thereafter, the framing adjustment controller 7 cancels (stops) the control of the framing adjustment in the framing priority mode (step S208).

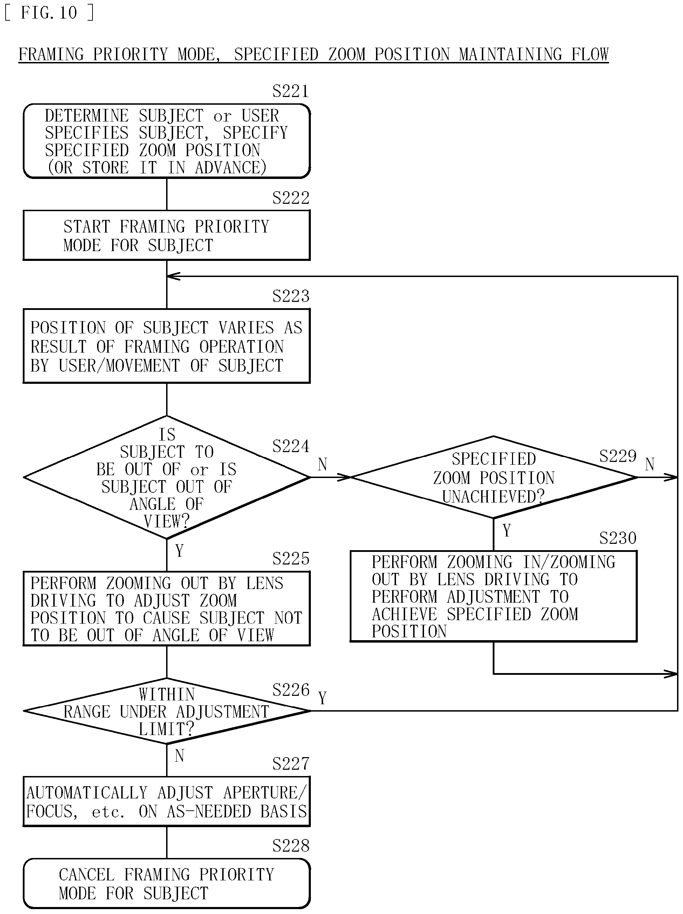

FIG. 10 illustrates an example of an operation flow in a case of performing the framing adjustment in the framing priority mode while maintaining a specified zoom position by the imaging apparatus according to the first embodiment. In this operation flow, the specified zoom position is specified in advance by the framing adjustment setting section 9, or a predetermined specified zoom position is stored in advance. The framing adjustment controller 7 maintains the zoom position as long as the subject does not go out of the shooting angle-of-view range. However, also after performing zooming out when the subject is to be out of the angle of view, the framing adjustment controller 7 performs zooming in again if the shooting angle-of-view range has room, to thereby perform a control to attempt at maintaining the original specified zoom position.

First, the prediction process section 6 automatically determines the subject (step S221). Further, the user may manually specify the subject by means of the framing adjustment setting section 9. Further, the specified zoom position is specified in advance by the framing adjustment setting section 9, or a predetermined specified zoom position is stored in advance. Thereafter, the imaging apparatus starts operation in the framing priority mode (step S222).

Thereafter, when a position of the subject varies as a result of the framing operation by the user or a movement of the subject (step S223), the prediction process section 6 recognizes or predicts whether or not the subject is to be out of the shooting angle of view, or whether the subject is out of the shooting angle of view (step S224). It is to be noted that, in a case where a plurality of subjects is present, the subjects sometimes get closer to or away from each other.

In a case where the prediction process section 6 recognizes or predicts that the subject is not to be out of the shooting angle of view or is not out of the shooting angle of view (step S224; N), thereafter, the framing adjustment controller 7 determines whether or not the specified zoom position is unachieved (step S229). In a case where it is determined that the specified zoom position is achieved (step S229; N), the process returns to step S223. In contrast, in a case where it is determined that the specified zoom position is unachieved (step S229; Y), the framing adjustment controller 7 controls the zooming section 2 to perform zooming in or zooming out by lens driving, and adjust the zoom position to match the specified zoom position (step S230). Thereafter, the process returns to step S223.

Further, in a case where the prediction process section 6 recognizes or predicts that the subject is to be out of the shooting angle of view or is out of the shooting angle of view (step S224; Y), the framing adjustment controller 7 controls the zooming section 2 to perform zooming out by lens driving to adjust a zoom position to cause the subject not to be out of the shooting angle of view, thereby performing the framing adjustment (step S225).

Thereafter, the framing adjustment controller 7 determines whether or not the framing adjustment is within the range under the adjustment limit (step S226).

In a case where the framing adjustment controller 7 determines that the framing adjustment is within the range under the adjustment limit (step S226; Y), the process returns to step S223. In contrast, in a case where it is determined that the framing adjustment is not within the range under the adjustment limit (step S226; N), the brightness, the focus, and the like sometimes vary as a result of the framing operation by the user. Therefore, the framing adjustment controller 7 controls the lens actuator 21 (FIG. 2) or the like on an as-needed basis to automatically adjust the aperture, the focus, and the like (step S227). Thereafter, the framing adjustment controller 7 cancels (stops) the control of the framing adjustment in the framing priority mode (step S228).

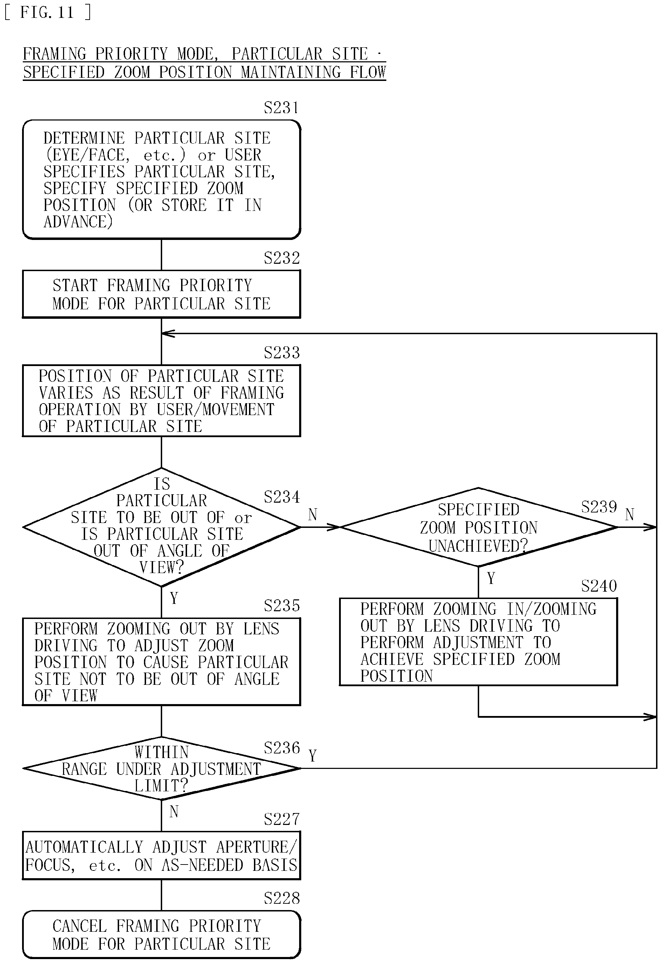

FIG. 11 illustrates an example of an operation flow in a case of performing the framing adjustment in the framing priority mode for a particular site while maintaining a specified zoom position by the imaging apparatus according to the first embodiment. In this operation flow, the framing adjustment setting section 9 performs the framing adjustment that allows not the entire subject but a particular site (object) such as an eye or a face to be kept within the shooting angle-of-view range.

First, the prediction process section 6 automatically determines a particular site of the subject (step S231). Further, the user may manually specify the particular site of the subject by means of the framing adjustment setting section 9. Further, the specified zoom position is specified in advance by the framing adjustment setting section 9, or a predetermined specified zoom position is stored in advance. Thereafter, the imaging apparatus starts operation in the framing priority mode (step S232).

Thereafter, when a position of the particular site varies as a result of the framing operation by the user or a movement of the particular site (step S233), the prediction process section 6 recognizes or predicts whether or not the particular site is to be out of the shooting angle of view, or whether the particular site is out of the shooting angle of view (step S234). It is to be noted that, in a case of a plurality of particular sites, the particular sites sometimes get closer to or away from each other.

In a case where the prediction process section 6 recognizes or predicts that the particular site is not to be out of the shooting angle of view or is not out of the shooting angle of view (step S234; N), thereafter, the framing adjustment controller 7 determines whether or not the specified zoom position is unachieved (step S239). In a case where the framing adjustment controller 7 determines that the specified zoom position is achieved (step S239; N), the process returns to step S233. In contrast, in a case where it is determined that the specified zoom position is unachieved (step S239; Y), the framing adjustment controller 7 controls the zooming section 2 to perform zooming in or zooming out by lens driving, and adjust the zoom position to match the specified zoom position (step S240). Thereafter, the process returns to step S233.

Further, in a case where the prediction process section 6 recognizes or predicts that the particular site is to be out of the shooting angle of view or is out of the shooting angle of view (step S234; Y), the framing adjustment controller 7 controls the zooming section 2 to perform zooming out by lens driving to adjust a zoom position to cause the particular site not to be out of the shooting angle of view, thereby performing the framing adjustment (step S235).

Thereafter, the framing adjustment controller 7 determines whether or not the framing adjustment is within the range under the adjustment limit (step S236).

In a case where the framing adjustment controller 7 determines that the framing adjustment is within the range under the adjustment limit (step S236; Y), the process returns to step S233. In contrast, in a case where it is determined that the framing adjustment is not within the range under the adjustment limit (step S236; N), the brightness, the focus, and the like sometimes vary as a result of the framing operation by the user. Therefore, the framing adjustment controller 7 controls the lens actuator 21 (FIG. 2) or the like on an as-needed basis to automatically adjust the aperture, the focus, and the like (step S237). Thereafter, the framing adjustment controller 7 cancels (stops) the control of the framing adjustment in the framing priority mode (step S238).

### [1.3 Effects and Modifications]

As described above, according to the imaging apparatus and the imaging control method of the first embodiment, it is possible to easily perform the framing adjustment.

Regarding the imaging apparatus and the imaging control method according to the first embodiment, it is also possible to add operation of automatically releasing the shutter during the operation of the framing adjustment. For example, it may be configured to perform the operation of automatically releasing the shutter at a timing when the subject is to be out of the shooting angle of view during the operation in the zooming priority mode.

Further, regarding the imaging apparatus and the imaging control method according to the first embodiment, in order to improve convenience at the time of moving image editing, it is also possible to set a trimming flag in image data at a moment when the subject exits the shooting angle-of-view range after the subject enters the shooting angle-of-view range during the operation of the framing adjustment.

Further, regarding the imaging apparatus and the imaging control method according to the first embodiment, it is also possible to perform the framing adjustment matching a template composition registered in advance. In this case, a plurality of template compositions may be prepared so that the user can select a desired template by means of the operation button of the camera body 100 or the like.

Further, the technique of the framing adjustment in the framing priority mode of the imaging apparatus and the imaging control method according to the first embodiment may be used for automating dolly zoom at the time of shooting a moving image. The dolly zoom is a shooting method of varying only the sense of perspective of the background while maintaining the size of the subject constant.

In order to set a composition, it has been necessary for a user to control zooming and framing at the same time. However, if the subject is moving quickly or is performing a difficult-to-predict movement, the angle of view is not stable, and in some cases, the subject may be framed out. According to the imaging apparatus and the imaging control method of the first embodiment, the user performs one of the zooming and the framing, and the imaging apparatus side automatically controls the other. This makes it possible to reduce a load while reflecting the human intention of determining the composition. In this case, by using an object recognition technique, an object tracking technique, or the like for the automatic control of the zooming and the framing on the imaging apparatus side, it is possible to achieve stabilization of a composition rather than mere image stabilization.

According to the imaging apparatus and the imaging control method of the first embodiment, the number of shooting opportunities increases for still images, and angle-of-view stabilization is achieved for moving-image shooting. It is thereby possible to reduce the load on the photographer and to contribute to quality improvement of images.

According to the imaging apparatus and the imaging control method of the first embodiment, by setting the target of the framing adjustment not to the entire subject but to a particular site (an eye, a face, or the like), it is possible to keep the targeted position within the shooting angle-of-view range. In this case, even if the user performs zooming beyond the subject size, the operation of the framing adjustment is continued. For example, in a case where the eyes are set as the target of the framing adjustment, it is applicable to an upper-body shot, a head shot, and the like. It is also very useful for eyes of an animal or the like. Further, setting the optical-axis maintaining range by the framing adjustment not to the entire angle of view but to the specified region in the angle of view makes it possible to obtain still images and moving images that are more stable in composition. In a case where the specified region is made as narrow as possible, zooming or framing is allowed to be performed without moving the target of the framing adjustment from the screen. For example, in a case where an eye of an animal is set as the target of the framing adjustment and zooming is performed in the zooming priority mode, it is possible to easily take a burst shot, a moving image, or the like without the eye of the animal moving from one point in the angle of view while performing zooming as long as it is within the optical-axis adjustment range. This is greatly advantageous not only in the zooming priority mode but also in the framing priority mode.

It is to be noted that effects described herein are merely illustrative and not limitative, and any other effect may be provided. This is similarly applicable to effects of other embodiments below.

### <2. Second Embodiment>

Next, a description is given of an imaging apparatus and an imaging control method according to a second embodiment of the present disclosure. It is to be noted that, in the following, the same reference numerals are assigned to substantially the same parts as the components of the imaging apparatus and the imaging control method according to the first embodiment described above, and descriptions thereof will be omitted as appropriate.

A basic configuration of the imaging apparatus according to the second embodiment of the present disclosure may be substantially similar to the configuration illustrated in FIGs. 1 and 2.

In the imaging apparatus according to the second embodiment, the framing adjustment setting section 9 may include, for example, a mode dial, a body operation button, and the like.

In the imaging apparatus according to the second embodiment, the framing adjustment setting section 9 may include a first setting section that sets which of the framing section 3 and the zooming section 2 to control to thereby perform the framing adjustment that is the control based on the movement of the subject by the framing adjustment controller 7. Further, the framing adjustment setting section 9 may include a second setting section that sets whether or not to perform the framing adjustment by the framing adjustment controller 7.

The imaging apparatus according to the second embodiment is configured to automatically switch between the zooming priority mode and the framing priority mode. For example, it is possible to automatically set the operation mode to the zooming priority mode while the user is moving the zoom ring of the zooming operation section 4 (FIG. 1) or the lens IF 23 (FIG. 2) or while the user is pressing a particular button of the zooming operation section 4 (FIG. 1) or the lens IF 23 (FIG. 2), and to set the operation mode to the framing priority mode in other cases.

FIG. 12 illustrates an example of an operation flow in a case of automatically performing ON/OFF switching of the framing adjustment and selection of the operation mode of the framing adjustment by the imaging apparatus according to the second embodiment.

In the imaging apparatus according to the second embodiment, it is possible to select each setting of a "zooming priority" setting, a "framing priority" setting, a "zooming priority/framing priority automatic switching" setting, and a "framing adjustment ON/OFF" setting by means of a mode dial or menus provided on the framing adjustment setting section 9 (FIG. 1) or the trigger IF 41 (FIG. 2).

Even if the "zooming priority" setting, the "framing priority" setting, or the "zooming priority/framing priority automatic switching" setting is selected, the framing adjustment function itself is allowed to be turned ON/OFF independently by means of another interface. To give an example, ON/OFF is instantly switchable by means of a button on the lens IF 23 (FIG. 2) or the trigger IF 41 (FIG. 2) as an interface for the "framing adjustment ON/OFF" setting. Further, it is also conceivable that the framing adjustment is turned ON while the shutter button is pressed halfway and turned OFF when the shutter button having been pressed halfway is released.

In the "zooming priority/framing priority automatic switching" setting, switching is automatically performed between the "zooming priority" setting and the "framing priority" setting depending on the operation of the user, which makes it unnecessary to perform an operation on a mode dial, a menu button, or the like. To give examples, "the zooming priority mode is set while the zoom ring is in operation, and the framing priority mode is set when a predetermined time elapses after the zoom ring is released" or "the zooming priority mode is set when a finger is in contact with the zoom ring, and the framing priority mode is set when the finger is not in contact with the zoom ring".

In a case where the "framing priority" setting is set, the framing adjustment controller 7 controls the zooming section 2 to automatically perform zooming in and zooming out. If this causes the zoom ring to operate, the user's sense of use decreases. Therefore, in a case of giving priority to the framing, it is not necessary to feedback the zooming operation to the zoom lens.

Hereinafter, a description is given with reference to an operation flow of FIG. 12 as an example. First, the prediction process section 6 automatically determines the subject (step S301). Further, the user may manually specify the subject by means of the framing adjustment setting section 9.

Thereafter, the framing adjustment controller 7 determines whether or not the "zooming priority" setting is set (step S302). In a case where it is determined that the "zooming priority" setting is set (step S302; Y), the framing adjustment controller 7 thereafter determines whether or not the current setting of the "framing adjustment ON/OFF" is ON (step S306). In a case where it is determined that the current setting of the "framing adjustment ON/OFF" is not ON (step S306; N), the framing adjustment controller 7 cancels (stops) the zooming priority mode (step S308). Further, in a case where it is determined that the current setting of the "framing adjustment ON/OFF" is ON (step S306; Y), the framing adjustment controller 7 starts operation in the zooming priority mode (step S309).

In contrast, in a case where it is determined that the "zooming priority" setting is not set (step S302; N), the framing adjustment controller 7 thereafter determines whether or not the "framing priority" setting is set (step S303). In a case where it is determined that the "framing" setting is set (step S303; Y), the framing adjustment controller 7 thereafter determines whether or not the current setting of the "framing adjustment ON/OFF" is ON (step S307). In a case where it is determined that the current setting of the "framing adjustment ON/OFF" is not ON (step S307; N), the framing adjustment controller 7 cancels (stops) the zooming priority mode (step S308). Further, in a case where it is determined that the current setting of the "framing adjustment ON/OFF" is ON (step S307; Y), the framing adjustment controller 7 starts operation in the framing priority mode (step S310).

Further, in a case where it is determined that the "framing priority" setting is not set (step S303; N), the framing adjustment controller 7 thereafter determines whether or not the "zooming priority/framing priority automatic switching" setting is set (step S304). In a case where it is determined that the "zooming priority/framing priority automatic switching" setting is not set (step S304; N), the framing adjustment controller 7 cancels (stops) the zooming priority mode (step S308). Further, in a case where it is determined that the "zooming priority/framing priority automatic switching" setting is set (step S304; Y), the framing adjustment controller 7 thereafter determines whether or not the zoom ring is in operation, or whether or not a finger is in contact with the zoom ring (step S305). In a case where it is determined that the zoom ring is in operation or that a finger is in contact with the zoom ring (step S305; Y), the framing adjustment controller 7 causes the process to proceed to step S306 described above. Further, in a case where it is determined that the zoom ring is not in operation or that a finger is not in contact with the zoom ring (step S305; N), the framing adjustment controller 7 causes the process to proceed to step S307 described above.

Other configurations, operations, and effects may be substantially similar to those of the imaging apparatus and the imaging control method according to the first embodiment described above.

### <3. Third Embodiment>

Next, a description is given of an imaging apparatus and an imaging control method according to a third embodiment of the present disclosure. It is to be noted that, in the following, the same reference numerals are assigned to substantially the same parts as the components of the imaging apparatus and the imaging control method according to the first or the second embodiment described above, and descriptions thereof will be omitted as appropriate.

A basic configuration of the imaging apparatus according to the third embodiment of the present disclosure may be substantially similar to the configuration illustrated in FIGs. 1 and 2.

In the imaging apparatus according to the third embodiment, in a case where the prediction process section 6 predicts that the subject is to be out of the predetermined shooting range and where the zooming section 2 is operated by the user operation, the framing adjustment controller 7 may control the framing section 3 to perform the framing adjustment to cause the subject not to be out of the predetermined shooting range and disable the zoom-in operation by the user operation.

FIG. 13 illustrates an example of a basic operation flow in a case of disabling the zoom-in operation in a particular case while performing the framing adjustment in the zooming priority mode by the imaging apparatus according to the third embodiment.

As compared with the operation flow of FIG. 6, the operation flow of FIG. 13 additionally includes step S110 and step S111. In the following, parts different from those in the operation flow of FIG. 6 are described.

In a case where the prediction process section 6 recognizes or predicts that the subject is to be out of the shooting angle of view or is out of the shooting angle of view (step S104; Y), the framing adjustment controller 7 thereafter disables the zoom-in operation by the user (while the zoom-out operation remains enabled) (step S110). Thereafter, the process proceeds to step S105. As the disabling of the zoom-in operation, for example, the zoom ring, the operation button, or the like is disabled.

In contrast, in a case where the prediction process section 6 recognizes or predicts that the subject is not to be out of the shooting angle of view or is not out of the shooting angle of view (step S104; N), the framing adjustment controller 7 thereafter enables the zoom-in operation if the zooming in is disabled (step S111). Thereafter, the process proceeds to step S103.

Other configurations, operations, and effects may be substantially similar to those of the imaging apparatus and the imaging control method according to the first or the second embodiment described above.

### <4. Fourth Embodiment>

Next, a description is given of an imaging apparatus and an imaging control method according to a fourth embodiment of the present disclosure. It is to be noted that, in the following, the same reference numerals are assigned to substantially the same parts as the components of the imaging apparatus and the imaging control method according to any of the first to the third embodiments described above, and descriptions thereof will be omitted as appropriate.

A basic configuration of the imaging apparatus according to the fourth embodiment of the present disclosure may be substantially similar to the configuration illustrated in FIGs. 1 and 2.

In the imaging apparatus according to the fourth embodiment, the prediction process section 6 may change the size of the target to predict whether or not the target is to be out of the predetermined shooting range, in accordance with a rate of the entire subject or a particular site of the subject occupying the predetermined shooting range.

The prediction process section 6 may change the target to predict whether or not the target is to be out of the predetermined shooting range to a target larger than a current target of prediction, in a case where it is determined that the rate of the entire subject or the particular site of the subject occupying the predetermined shooting range is sufficiently small. Further, the prediction process section 6 may change the target to predict whether or not the target is to be out of the predetermined shooting range to a target smaller than the current target of prediction, in a case where it is determined that the particular site of the subject exceeds the predetermined shooting range.

FIG. 14 illustrates an example of an operation flow in a case of performing stepwise switching of a particular site to be the target of the framing adjustment while performing the framing adjustment in the zooming priority mode by the imaging apparatus according to the fourth embodiment. A description is given with reference to a case, as an example, where the particular sites to be the targets of the framing adjustment are the "entire subject", a "face", and an "eye" in order of largeness. It is to be noted that the particular site to be the target of the framing adjustment is allowed to be set as desired by means of the framing adjustment setting section 9 or the like.

First, the prediction process section 6 automatically determines a particular site of the subject (step S401). Further, the user may manually specify the particular site of the subject by means of the framing adjustment setting section 9. Thereafter, the imaging apparatus starts operation in the zooming priority mode (step S402).

Thereafter, when a position of the particular site varies as a result of the zooming operation by the user, the framing operation by the user, or a movement of the particular site (step S403), the prediction process section 6 thereafter determines whether or not the particular site is sufficiently small with respect to the shooting angle of view (step S404). In a case where it is determined that the particular site is sufficiently small with respect to the shooting angle of view (step S404; Y), the prediction process section 6 changes the particular site (for example, if the particular site has been the "eye", the prediction process section 6 changes it to the "face", and if the particular site has been the "face", the prediction process section 6 changes it to the "the entire subject") (step S405). Thereafter, the process returns to step S403.

In contrast, in a case where it is determined that the particular site is not sufficiently small with respect to the shooting angle of view (step S404; N), the prediction process section 6 thereafter determines whether or not the particular site is to exceed the shooting angle of view (step S406). In a case where it is determined that the particular site is to exceed the shooting angle of view (step S406; Y), the prediction process section 6 changes the particular site (for example, if the particular site has been the "the entire subject", the prediction process section 6 changes it to the "face", and if the particular site has been the "face", the prediction process section 6 changes it to the "eye") (step S407). Thereafter, the process returns to step S403.

In a case where it is determined that the particular site is not to exceed the shooting angle of view (step S406; N), the prediction process section 6 thereafter recognizes or predicts whether or not the particular site is to be out of the shooting angle of view, or whether the particular site is out of the shooting angle of view (step S408). In a case where the prediction process section 6 recognizes or predicts that the particular site is not to be out of the shooting angle of view, or is not out of the shooting angle of view (step S408; N), the process returns to step S423.

In a case where the prediction process section 6 recognizes or predicts that the particular site is to be out of the shooting angle of view, or is out of the shooting angle of view (step S408; Y), the framing adjustment controller 7 controls the framing section 3 to perform optical-axis adjustment, thereby performing the framing adjustment in a direction in which the particular site is not to be out of the shooting angle of view (basically, in a direction in which the particular site moves in a direction toward the center of the screen) (step S409).

Thereafter, the framing adjustment controller 7 determines whether or not the framing adjustment is within the range under the adjustment limit (step S410).

In a case where it is determined that the framing adjustment is not within the range under the adjustment limit (step S410; N), the framing adjustment controller 7 cancels (stops) the control of the framing adjustment in the zooming priority mode (step S413).

In contrast, even in a case where it is determined that the framing adjustment is within the range under the adjustment limit (step S410; Y), if the adjustment limit is close, the framing adjustment controller 7 causes, on an as-needed basis, the display section 42 (FIG. 2) to display a display warning that the framing adjustment is approaching the adjustment limit, a degree related to the adjustment limit, a direction of framing that relaxes the framing adjustment, or the like (step S411). For example, the framing adjustment controller 7 causes the display section 42 (FIG. 2) to perform display presenting which direction the user should shift the framing in to make room for adjustment or the like by means of colors, texts, images, etc. Further, the brightness, the focus, and the like sometimes vary as a result of the zooming operation by the user, the framing operation by the user, or the like. Therefore, the framing adjustment controller 7 controls the lens actuator 21 (FIG. 2) or the like on an as-needed basis to automatically adjust the aperture, the focus, and the like (step S412). Thereafter, the process returns to step S403.

Other configurations, operations, and effects may be substantially similar to those of the imaging apparatus and the imaging control method according to any of the first to the third embodiments described above.

### <5. Other Embodiments>

The technology of the present disclosure is not limited to the description of each of the embodiments described above, and is modifiable in a variety of ways.

For example, the present technology can have the following configurations.

According to the present technology having the following configurations, it is possible to easily perform the framing adjustment.

(1) An imaging apparatus including:
   an imaging section;
   a zooming section;
   a framing section; and
   a controller that controls, in a case where one of the zooming section and the framing section is operated by a user operation, another of the zooming section and the framing section that is not operated by the user operation, in accordance with a movement of a subject.
(2) The imaging apparatus according to (1) described above, in which the framing section performs a process based on the movement of the subject in a case where the zooming section is operated by the user operation.
(3) The imaging apparatus according to (1) or (2) described above, in which the zooming section performs a process based on the movement of the subject in a case where the framing section is operated by the user operation.
(4) The imaging apparatus according to any one of (1) to (3) described above, in which
   the framing section performs a process based on the movement of the subject in a case where the zooming section is operated by the user operation, and
   the zooming section performs a process based on the movement of the subject in a case where the framing section is operated by the user operation.
(5) The imaging apparatus according to any one of (1) to (4) described above, further including a prediction process section that predicts whether or not the subject is to be out of a predetermined shooting range on the basis of the movement of the subject.
(6) The imaging apparatus according to any one of (1) to (5) described above, in which the controller controls, in accordance with the movement of the subject, the other of the zooming section and the framing section that is not operated by the user operation to cause the subject not to be out of a predetermined shooting range.
(7) The imaging apparatus according to any one of (1) to (6) described above, further including
   a lens section, in which
   the zooming section includes at least one of a lens drive section or an image processor, the lens drive section driving the lens section to perform optical zooming, the image processor performing electronic zooming on the basis of an imaging signal.
(8) The imaging apparatus according to any one of (1) to (7) described above, further including
   a lens section, in which
   the framing section includes at least one of an image stabilizer or a posture adjustment mechanism, the image stabilizer driving at least one of the imaging section or the lens section to perform image stabilization, the posture adjustment mechanism being configured to adjust a posture of the imaging apparatus as a whole.
(9) The imaging apparatus according to any one of (1) to (8) described above, further including a display section that warns that framing adjustment performed by the zooming section or the framing section in accordance with the movement of the subject is approaching an adjustment limit.
(10) The imaging apparatus according to any one of (1) to (9) described above, further including:
   a lens section; and
   a zooming operation section that includes at least one of a zoom ring or an operation button, the zoom ring driving the lens section to allow for the user operation on the zooming section, the operation button being provided on the lens section.
(11) The imaging apparatus according to any one of (1) to (10) described above, further including
   a shutter button, in which
   the controller performs a control based on the movement of the subject in a case where the shutter button is pressed halfway.
(12) The imaging apparatus according to any one of (1) to (11) described above, in which the controller controls the zooming section to perform a control of maintaining a predetermined zoom position in a case where the framing section is operated by the user operation and where the subject is predicted not to be out of a predetermined shooting range.
(13) The imaging apparatus according to any one of (1) to (12) described above, further including a first setting section that sets which of the framing section and the zooming section is to be controlled to perform a control based on the movement of the subject by the controller.
(14) The imaging apparatus according to any one of (1) to (13) described above, further including a second setting section that sets whether or not to perform a control based on the movement of the subject by the controller.
(15) The imaging apparatus according to any one of (1) to (14) described above, in which the controller controls the framing section to perform framing adjustment to cause the subject not to be out of a predetermined shooting range and disables a zoom-in operation by the user operation, in a case where the subject is predicted to be out of the predetermined shooting range and where the zooming section is operated by the user operation.
(16) The imaging apparatus according to (5) described above, in which the prediction process section changes a size of a target to predict whether or not the target is to be out of the predetermined shooting range, in accordance with a rate of the subject occupying the predetermined shooting range.
(17) The imaging apparatus according to (16) described above, in which
   the prediction process section changes the target to predict whether or not the target is to be out of the predetermined shooting range to a target larger than a current target of prediction, in a case where it is determined that a rate of the entire subject or a particular site of the subject occupying the predetermined shooting range is sufficiently small, and
   the prediction process section changes the target to predict whether or not the target is to be out of the predetermined shooting range to a target smaller than the current target of prediction, in a case where it is determined that the particular site of the subject exceeds the predetermined shooting range.
(18) An imaging control method including controlling, of an imaging apparatus including an imaging section, a zooming section, and a framing section, in a case where one of the zooming section and the framing section is operated by a user operation, another of the zooming section and the framing section that is not operated by the user operation, in accordance with a movement of a subject.

This application claims the priority on the basis of Japanese Patent Application No. 2019-104613 filed on June 4, 2019 with Japan Patent Office, the entire contents of which are incorporated in this application by reference.

It should be understood by those skilled in the art that various modifications, combinations, sub-combinations, and alterations may occur depending on design requirements and other factors insofar as they are within the scope of the appended claims or the equivalents thereof.

## Claims

1. An imaging apparatus comprising:
an imaging section;
a zooming section;
a framing section; and
a controller that controls, in a case where one of the zooming section and the framing section is operated by a user operation, another of the zooming section and the framing section that is not operated by the user operation, in accordance with a movement of a subject.

2. The imaging apparatus according to claim 1, wherein the framing section performs a process based on the movement of the subject in a case where the zooming section is operated by the user operation.

3. The imaging apparatus according to claim 1, wherein the zooming section performs a process based on the movement of the subject in a case where the framing section is operated by the user operation.

4. The imaging apparatus according to claim 1, wherein
the framing section performs a process based on the movement of the subject in a case where the zooming section is operated by the user operation, and
the zooming section performs a process based on the movement of the subject in a case where the framing section is operated by the user operation.

5. The imaging apparatus according to claim 1, further comprising a prediction process section that predicts whether or not the subject is to be out of a predetermined shooting range on a basis of the movement of the subject.

6. The imaging apparatus according to claim 1, wherein the controller controls, in accordance with the movement of the subject, the other of the zooming section and the framing section that is not operated by the user operation to cause the subject not to be out of a predetermined shooting range.

7. The imaging apparatus according to claim 1, further comprising
a lens section, wherein
the zooming section includes at least one of a lens drive section or an image processor, the lens drive section driving the lens section to perform optical zooming, the image processor performing electronic zooming on a basis of an imaging signal.

8. The imaging apparatus according to claim 1, further comprising
a lens section, wherein
the framing section includes at least one of an image stabilizer or a posture adjustment mechanism, the image stabilizer driving at least one of the imaging section or the lens section to perform image stabilization, the posture adjustment mechanism being configured to adjust a posture of the imaging apparatus as a whole.

9. The imaging apparatus according to claim 1, further comprising a display section that warns that framing adjustment performed by the zooming section or the framing section in accordance with the movement of the subject is approaching an adjustment limit.

10. The imaging apparatus according to claim 1, further comprising:
a lens section; and
a zooming operation section that includes at least one of a zoom ring or an operation button, the zoom ring driving the lens section to allow for the user operation on the zooming section, the operation button being provided on the lens section.

11. The imaging apparatus according to claim 1, further comprising
a shutter button, wherein
the controller performs a control based on the movement of the subject in a case where the shutter button is pressed halfway.

12. The imaging apparatus according to claim 1, wherein the controller controls the zooming section to perform a control of maintaining a predetermined zoom position in a case where the framing section is operated by the user operation and where the subject is predicted not to be out of a predetermined shooting range.

13. The imaging apparatus according to claim 1, further comprising a first setting section that sets which of the framing section and the zooming section is to be controlled to perform a control based on the movement of the subject by the controller.

14. The imaging apparatus according to claim 1, further comprising a second setting section that sets whether or not to perform a control based on the movement of the subject by the controller.

15. The imaging apparatus according to claim 1, wherein the controller controls the framing section to perform framing adjustment to cause the subject not to be out of a predetermined shooting range and disables a zoom-in operation by the user operation, in a case where the subject is predicted to be out of the predetermined shooting range and where the zooming section is operated by the user operation.

16. The imaging apparatus according to claim 5, wherein the prediction process section changes a size of a target to predict whether or not the target is to be out of the predetermined shooting range, in accordance with a rate of the subject occupying the predetermined shooting range.

17. The imaging apparatus according to claim 16, wherein
the prediction process section changes the target to predict whether or not the target is to be out of the predetermined shooting range to a target larger than a current target of prediction, in a case where it is determined that a rate of the entire subject or a particular site of the subject occupying the predetermined shooting range is sufficiently small, and
the prediction process section changes the target to predict whether or not the target is to be out of the predetermined shooting range to a target smaller than the current target of prediction, in a case where it is determined that the particular site of the subject exceeds the predetermined shooting range.

18. An imaging control method comprising controlling, of an imaging apparatus including an imaging section, a zooming section, and a framing section, in a case where one of the zooming section and the framing section is operated by a user operation, another of the zooming section and the framing section that is not operated by the user operation, in accordance with a movement of a subject.
